# EUROPEAN PATENT SPECIFICATION

(11) **EP 0 418 393 B1**
(45) Date of publication and mention of the grant of the patent: **10.01.1996**
(21) Application number: 90904654.2
(22) Date of filing: 16.03.1990
(51) Int. Cl.: G05B 19/05

(54) **INPUT/OUTPUT SIGNAL CONTROL SYSTEM**
EINGABE/AUSGABESIGNALSTEUERSYSTEM
SYSTEME DE COMMANDE DE SIGNAUX D'ENTREE/SORTIE

(30) Priority: 20.03.1989 JP 69089/89
(43) Date of publication of application: 27.03.1991
(73) Proprietor: FANUC LTD., Minamitsuru-gun, Yamanashi 401-05 (JP)
(72) Inventor: TANAKA, Kunio, Tokyo 196 (JP); NAKANO, Hiroyuki, FANUC Dai 3 Vira-Karamatsu, Yamanashi 401-05 (JP)
(74) Representative: Flint, Adam
(86) International application number: JP9000360
(87) International publication number: WO9011556

(56) References cited:
- EP-A- 0 283 382
- DE-A- 2 532 455
- FR-A- 2 587 812
- JP-A-60 178 502
- JP-A-63 211 004

## Description

### Technical Field

The present invention relates to a method of controlling input and output signals, and more particularly to a method of an input and output signal control method which uses safely controlled signals as input and output signals when the control of a programmable controller is ceased.

### Background Art

Generally, computerized numerical control systems have a built-in programmable controller (PC) which is referred to as a programmable machine controller (PMC). The PMC receives a signal from a switch of a numerically controlled machine or a button on a machine control panel, processes the received signal as required, and transmits the processed signal to the computerized numerical control system. In addition, the PMC receives a signal representative of an M function, an S function, or the like from the computerized numerical control system, processes the received signal through a logic operation, and applies the processed signal to the numerically controlled machine. These signals are processed according to a sequence program stored in a ROM in the PMC.

Sequence programs are generated by machine manufacturers so that the sequence programs depend on individual machines, respectively. After a sequence program has been generated, it is debugged. During the debugging process, it is desirable that the sequence program be executed while the machine is not actually being connected for safety considerations.

However, it is necessary to actually connect the machine for a final check of the sequence program. Particularly, it is indispensable to operate the actual machine when delicate timings are to be checked.

To check the sequence program with the actual machine connected, the processing operation of the PMC is sometimes stopped while the sequence program is being executed. When the execution of the sequence program is interrupted, the PMC stops the reading of input signals and the transmission of output signals, and the input and output signals then maintain their states before they are stopped.

As a result, if a feed hold signal, for example, is applied at this time, it is not transmitted to the numerical control system, causing a dangerous situation in the operation of the machine. A signal which is operating a moving component of the machine, e.g., actuating a valve, is continuously in an on-state that keeps the valve actuated. Though this signal should be turned off by a limit switch or the like, if the PMC is stopping its processing operation, the on-state of the signal is maintained as it is, tending to cause a machine breakdown.

JP-A-63-211004 discloses a programmable controller in which, when a sequence program is stopped, provides a stop pulse to save the setting of an output state and other information.

The present invention has been made in view of the aforesaid drawbacks. It is an object of the present invention to provide an input and output signal control method which employs quasi input and output signals that will make the control process safe when a programmable controller is stopped in operation.

According to the present invention, there is provided a method of controlling input and output signals for a programmable controller in a numerical control system, the method comprising the steps of:
providing a quasi input and output signal region in addition to an ordinary input and output signal region;
storing quasi input signals and quasi output signals in the quasi input and output signal region, said quasi input signals being safe for the numerical control system and said quasi output signals being safe for a machine connected to the numerical control system; and,
transferring the quasi input signals to a processor of the numerical control system and the quasi output signals to the machine when the operation of the programmable controller is stopped.

When the programmable controller is stopped in operation, predetermined quasi input and output signals are received and transmitted as input and output signals to make the overall control process safe.

In the drawings:
FIG. 1 is a schematic conceptual diagram of an input and output signal control method according to the present invention; and
FIG. 2 is a block diagram of the overall hardware of a computerized numerical control (CNC) system which carries out the present invention.

### Best Mode for Carrying Out the Invention

An embodiment of the present invention will hereinafter be described with reference to the drawings.

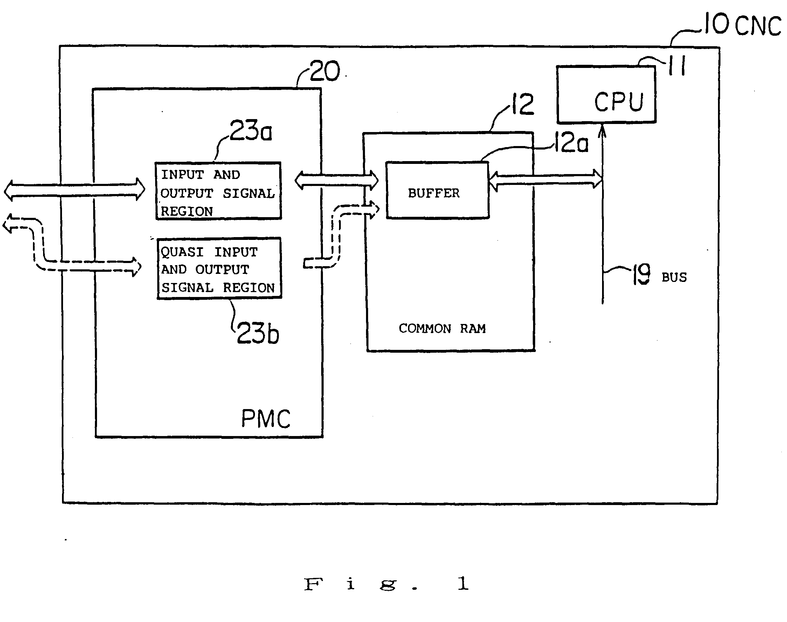

FIG. 1 is a schematic conceptual diagram of an input and output signal control method according to the present invention. A computerized numerical control (CNC) system 10 has a programmable machine controller (PMC) 20 and a common RAM 12. The PMC 20 receives an input signal from a numerically controlled machine and stores the received input signal in an input and output signal region 23a. After processing the input signal as required, the PMC 20 writes the processed signal as an input signal for the computerized numerical control system into a buffer 12a of the common RAM 12. The input signal which is written in the buffer 12a is read through a bus 19 by a processor 11 of the CNC system.

A signal representative of an M function, an S function, or the like from the CNC system is written in the buffer 12a. The PMC 20 reads this signal, processes the signal through a logic operation according to a sequence program, writes the processed signal in the input and output signal region 23a, and then transmits the signal as an output signal to the machine.

When the operation of the PMC is stopped for the debugging of the sequence program, no new input signal will be written in the buffer 12a, and the previously written signal is kept as it is in the buffer 12a. Therefore, even if a feed hold button on the control panel of the machine is pushed, the CNC system would not be brought into a feed hold condition. As a result, the machine would not be stopped in response to the depression of the feed hold button, causing a dangerous situation in the operation of the machine.

Conversely, if the PMC 20 is stopped while an output signal which is operating a moving component of the machine remains in an on-state, then the on-state of the signal is maintained. Even when the moving component of the machine reaches a dangerous area and a limit switch for stopping the moving component is actuated, the on-state of the signal is maintained, and the moving component would continue to move, resulting in a machine breakdown.

To avoid the above problems, the PMC 20 has a quasi input and output signal region 23b. When it is desired to stop the operation of the PMC 20, quasi input and output signals are written in the buffer 12a or applied as output signals to the machine. The quasi input and output signals are selected to make the control process safe. For example, a quasi feed hold signal to be written in the buffer 12a is such that it makes the CNC system in a feed-hold condition. When the PMC 20 is stopped in operation, the CNC system 10 is brought into a feed-hold condition, so that the machine is stopped for safety.

A quasi output signal to be applied to the machine for actuating a moving component is such that it inactivates a valve or the like. As a consequence, when the operation of the PMC 20 is ceased, the moving component of the machine is stopped.

How to define such quasi input and output signals varies from machine to machine. If the signals were defined with too much emphasis on safety, then when the PMC 20 is stopped to debug the sequence program, the CNC system or the machine would not operate at all, and the sequence program could not be debugged. In view of this, it is necessary to define signals to be stored in the quasi signal region 23b while taking into account both safety and the extent to which the machine should be operated for the debugging of the sequence program.

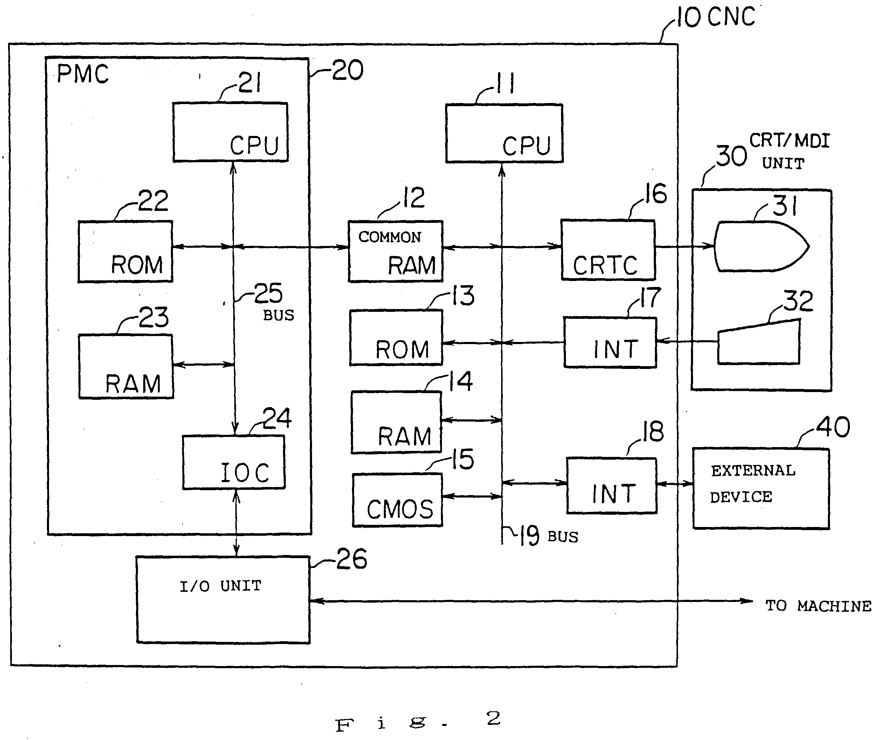

FIG. 2 is a block diagram of the overall hardware of a computerized numerical control (CNC) system which carries out the present invention. The PMC 20 is contained in the CNC system 10. The processor 11 is a centralized processor for controlling the entirety of the CNC system 10. The processor 11 reads a system program stored in a ROM 13, and executes a control process for the entire CNC system 10 according to the system program.

The common RAM 12 receives and transmits data between the CNC 10 and the PMC 20, and stores data which are required to be accessed by the CNC system 10 and the PMC 20 at the same time.

A RAM 14 stores temporary calculated data, display data, etc. A CMOS 15 is constructed as a nonvolatile memory and stores amounts of tool correction, amounts of pitch error correction, a machining program, parameters, etc. The CMOS 15 is backed up by a battery (not shown), so that it operates as a nonvolatile memory. Therefore, even when the power supply of the CNC system 10 is switched off, it holds the stored data as they are. The CMOS 15 also stores parameters which are needed by the PMC 20.

A graphic control circuit 16 converts digital data such as present position data of respective axes, alarm data, parameters, image data, etc. into an image signal, and transmits the image signal as an output signal to a display device 31 of a CRT/MDI unit 30. An interface 17 receives data from a keyboard 32 in the CRT/MDI unit 30 and transmits the received data to the processor 11.

Another interface 18 connects the CNC 10 to an external device 40 which may be a paper tape reader, a paper tape puncher, a paper tape reader/puncher, a printer, or the like. A machining program can be read from the paper tape reader into the CNC system through the interface 18. A machining program which is edited in the CNC system 10 can be sent to the paper tape puncher through the interface 18.

The processor 11, the common RAM 12, the ROM 13, and other elements described above are connected together by the bus 19.

Various elements such as axis control circuits for controlling servomotors, a spindle control circuit, a spindle amplifier, a manual pulse generator interface, etc. are omitted from illustration in FIG. 2.

The PMC 20 has a PMC processor 21 which is connected through a bus 25 to the common RAM 12, which in turn is connected to the bus 19 of the CNC system 10.

To the bus 25, there is connected a ROM 22 which stores a management program for controlling the PMC 20 and a sequence program. The sequence program is generally expressed by a ladder language, but may be generated using a high-level language such as PASCAL. Instead of the ROM 22, a ROM cassette interface may be used, and a ROM cassette storing a sequence program may be connected to the ROM cassette interface. In this manner, the sequence program can easily be raised in level or modified.

To the bus 25, there is also connected a RAM 23 which has the input and output signal region 23a for storing input and output signals. As the sequence program is executed, the contents of the input and output signal region 23a are rewritten. The quasi input and output signal region 23b is also included in the RAM 23. The RAM 23 is not backed up by a battery. Actual quasi input and output signals are stored in the CMOS 15, and are transferred to the RAM 23 when the power supply is switched on.

In normal operation, an input signal in the input and output signal region 23a is transferred to the buffer 12a of the RAM 12. When the operation of the PMC 20 is stopped, a quasi input signal is transferred to the buffer 12a. Therefore, a safe input signal is supplied to the CNC system.

An I/O control circuit 24 is connected to the bus 25, and converts an output signal stored in the RAM 23 into a serial signal and transmits the serial signal to an I/O unit 26. The I/O control circuit 24 also converts a serial signal from the I/O unit 26 into a parallel signal and sends the parallel signal to the bus 25. The signal is then stored in the RAM 23 by the processor 21. When the PMC 20 is stopped in operation, a quasi output signal defined for safety considerations is sent from the quasi input and output signal region 23a to the buffer 12a.

The processor 21 receives command signals such as of an M function command, a T function command, etc. through the common RAM 12 from the CNC system 10, temporarily stores the received command signals in the RAM 23, processes the command signals according to the sequence program stored in the ROM 22, and sends the processed command signals as output signals to the I/O unit 26 through the I/O control circuit 24. These output signals control a hydraulic device, a pneumatic device, and an electromagnetic device in the machine.

The processor 21 receives input signals such as a limit switch signal from the machine, a control switch signal from the machine control panel, etc., which are supplied through the I/O unit 26, and stores the received input signals in the RAM 23. Those input signals which are not required to be processed by the PMC 20 are sent to the processor 11 through the common RAM 12. The other signals are processed according to the sequence program. Some of the processed signals are fed to the CNC system 10, whereas the other processed signals are delivered as output signals through the I/O control circuit 24 and the I/O unit 26 to the machine.

The sequence program may contain commands for controlling movement of the respective axes. When these commands are read by the processor 21, they are sent through the RAM 12 to the processor 21 for controlling the servomotors. Likewise, the spindle motor, etc. can be controlled by commands from the PMC 20.

The sequence program stored in the ROM 22 and the input and output signals stored in the RAM 23 can be displayed on the display device 31 of the CRT/MDI unit 30.

Furthermore, the sequence program stored in the ROM 22 can be delivered through the common RAM 12 and the bus 19 to the printer connected to the interface 18, and can be printed by the printer.

A program generating device may be connected to the interface 18. A sequence program or the like which is generated by the program generating device may be transferred to the RAM 23, and the PMC 20 may be operated according to the sequence program stored in the RAM 23.

Using the CRT/MDI unit 30, the external device 40, and the program generating device, the operation of the PMC 20 is stopped, and the sequence program can be debugged.

While the present invention has been described above with reference to a PMC included as a PC in the CNC system, the present invention is also applicable to an independent PC.

Since quasi signals defined for safety considerations are received as input signals and transmitted as output signals when the operation of the PMC is stopped, the sequence program can safely debugged with the machine connected.

## Claims

1. A method of controlling input and output signals for a programmable controller (20) in a numerical control system (10), the method comprising the steps of:
providing a quasi input and output signal region (23b) in addition to an ordinary input and output signal region (23a);
storing quasi input signals and quasi output signals in the quasi input and output signal region (23b), said quasi input signals being safe for the numerical control system (10) and said quasi output signals being safe for a machine connected to the numerical control system (10); and,
transferring the quasi input signals to a processor (11) of the numerical control system (10) and the quasi output signals to the machine when the operation of the programmable controller (20) is stopped.

2. A method according to claim 1, wherein the quasi output signals are signals for stopping a moving component of the machine.

## Patentansprüche

1. Verfahren zum Steuern von Ein- und Ausgabesignalen für eine programmierbare Steuerung (20) in einem numerischen Steuersystem (10) mit folgenden Schritten:
Zusätzlich zu einem gewöhnlichen Ein- und Ausgabesignalbereich (23a) wird ein quasi Ein- und Ausgabesignalbereich (23b) vorgesehen;
quasi Eingabesignale und quasi Ausgabesignale werden in dem quasi Ein- und Ausgabesignalbereich (23b) abgespeichert, wobei die quasi Eingabesignale für das numerische Steuersystem (10) sicher sind und die quasi Ausgabesignale für eine an das numerische Steuersystem (10) angeschlossene Maschine sicher sind und
die quasi Eingabesignale werden an einen Prozessor (11) des numerischen Steuersystems (10) übertragen und die quasi Ausgabesignale an die Maschine, wenn der Betrieb der programmierbaren Steuerung (20) angehalten wird.

2. Verfahren nach Anspruch 1, bei dem die quasi Ausgabesignale Signale zum Anhalten einer Bewegungskomponente der Maschine sind.

## Revendications

1. Un procédé de commande de signaux d'entrée et de sortie pour un organe de commande programmable (20) d'une unité de commande numérique (10), le procédé comprenant les opérations consistant à :
créer une région (23b) de quasi-signaux d'entrée et de sortie en addition à une région (23a) de signaux ordinaires d'entrée et de sortie ;
stocker de quasi-signaux d'entrée et de quasi-signaux de sortie dans la région (23b) de quasi-signaux d'entrée et de sortie, lesdits quasi-signaux d'entrée étant sûrs pour l'unité de commande numérique (10) et lesdits quasi-signaux de sortie étant sûrs pour une machine reliée à l'unité de commande numérique (10) ; et
transférer les quasi-signaux d'entrée à un processeur (11) de l'unité de commande numérique (10) et les quasi-signaux de sortie à la machine lorsque le fonctionnement de l'organe de commande programmable (20) est arrêté.

2. Un procédé selon la revendication 1, dans lequel les quasi-signaux de sortie sont des signaux pour arrêter un élément mobile de la machine.
